# EUROPÄISCHE PATENTANMELDUNG

(11) **EP 2 194 076 A1**
(43) Veröffentlichungstag der Anmeldung: **09.06.2010**
(21) Anmeldenummer: 08170963.6
(22) Anmeldetag: 08.12.2008
(51) Int. Cl.: C08F 290/06, C08F 290/14, C08F 222/00, C08F 220/00, C08F 216/00

(54) **Semikontinuierlich betriebenes Verfahren zur Herstellung von Copolymeren**

(71) Anmelder: Construction Research and Technology GmbH, 83308 Trostberg (DE)
(72) Erfinder: Arlt, Klaus, 83278, Traunstein (DE); Dorfner, Reinhard, 84558, Kirchweidach (DE); Flakus, Silke, 85560, Ebersberg (DE); Bichler, Manfred, 84549, Engelsberg (DE); Wagner, Petra, 83308, Trostberg (DE); Scholz, Christian, 83308, Trostberg (DE); Wimmer, Barbara, 83342, Tacherting (DE)

(57) **Zusammenfassung**

Die Erfindung betrifft ein Verfahren zur Herstellung von Copolymeren mit mindestens zwei Verfahrensdurchgängen i) und ii), wobei
i) in einem ersten Verfahrensdurchgang Copolymer in semikontinuierlicher Betriebsweise in einer Polymerisationsvorrichtung, welche einen mit einer Dosiereinrichtung verbundenen Polymerisationsreaktor enthält, hergestellt wird, wobei Säuremonomer in der Dosiereinrichtung sowie Polyethermakromonomer, Säuremonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor eine wässrige Reaktionskomposition entsteht, in welcher Säuremonomer und Polyethermakromonomer unter Bildung des Copolymers durch radikalische Polymerisation umgesetzt werden, nach Beendigung der Dosierung des Säuremonomers und nach Umsetzung von mindestens 70 Mol-% des vorgelegten Polyethermakromonomers der Polymerisationsreaktor geleert wird, wobei eine Teilmenge der sich im Polymerisationsreaktor befindlichen wässrigen Reaktionskomposition einbehalten wird,
ii) in einem zweiten Verfahrensdurchgang Copolymer in semikontinuierlicher Betriebsweise hergestellt wird, wobei Polyethermakromonomer, Säuremonomer, Wasser sowie die einbehaltene Teilmenge der wässrigen Reaktionskomposition jeweils in einem Polymerisationsbehälter vorgelegt werden, radikalischer Polymerisationsinitiator in den Polymerisationsbehälter eingeleitet wird, während und/oder nach der Einleitung des radikalischen Polymerisationsinitiators Säuremonomer in den Polymerisationsbehälter eindosiert wird, wobei das Verhältnis der in den Polymerisationsbehälter vorgelegten, einbehaltenen Teilmenge der wässrigen Reaktionskomposition zu der Gesamtmenge des im zweiten Verfahrensdurchgang eingesetzten Wassers, des im zweiten Verfahrensdurchgang eingesetzten Säuremonomers und des im zweiten Verfahrensdurchgang eingesetzten Polyethermakromonomers 0,05 bis 30 Gew.-% beträgt.

## Beschreibung

Die vorliegende Erfindung betrifft ein Verfahren zur Herstellung eines Copolymers, das Copolymer sowie die Verwendung des Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden.

In der Praxis erfolgt die Copolymerisation meist in der Semi-Batch-Fahrweise. Die WO 2005/075529 beschreibt ein semikontinuierliches Herstellungsverfahren für besagte Copolymere, in welchem das Polyethermakromonomer vorgelegt wird und anschließend das Säuremonomer über die Zeit der Vorlage zudosiert wird. Obwohl das beschriebene Verfahren bereits kostengünstig ist und als Verfahrensprodukt Hochleistungsfließmittel erhalten werden, besteht weiterhin ein Bestreben, die Wirtschaftlichkeit des Verfahrens sowie Qualität des Verfahrensprodukts noch weiter zu verbessern.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel eine gute Performance zeigen.

Die Lösung dieser Aufgabe ist ein Verfahren zur Herstellung von Copolymeren mit mindestens zwei Verfahrensdurchgängen i) und ii), wobei
i) in einem ersten Verfahrensdurchgang Copolymer in semikontinuierlicher Betriebsweise in einer Polymerisationsvorrichtung, welche einen mit einer Dosiereinrichtung verbundenen Polymerisationsreaktor enthält, hergestellt wird, wobei Säuremonomer in der Dosiereinrichtung sowie Polyethermakromonomer, Säuremonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor eine wässrige Reaktionskomposition entsteht, in welcher Säuremonomer und Polyethermakromonomer unter Bildung des Copolymers durch radikalische Polymerisation umgesetzt werden, das molare Verhältnis von insgesamt eingesetztem Säuremonomer zu insgesamt eingesetztem Polyethermakromonomer 20 : 1 bis 1 : 1 beträgt, das molare Verhältnis von in den Polymerisationsreaktor vorgelegten Säuremonomer zu dem in den Polymerisationsreaktor eindosierten Säuremonomer 10 : 1 bis 1 : 10 beträgt, nach Beendigung der Dosierung des Säuremonomers und nach Umsetzung von mindestens 70 Mol-% des vorgelegten Polyethermakromonomers der Polymerisationsreaktor geleert wird, wobei eine Teilmenge der sich im Polymerisationsreaktor befindlichen wässrigen Reaktionskomposition einbehalten wird,
ii) in einem zweiten Verfahrensdurchgang Copolymer in semikontinuierlicher Betriebsweise hergestellt wird, wobei Polyethermakromonomer, Säuremonomer, Wasser sowie die einbehaltene Teilmenge der wässrigen Reaktionskomposition jeweils in einem Polymerisationsbehälter vorgelegt werden, radikalischer Polymerisationsinitiator in den Polymerisationsbehälter eingeleitet wird, während und/oder nach der Einleitung des radikalischen Polymerisationsinitiators Säuremonomer in den Polymerisationsbehälter eindosiert wird, wobei das Verhältnis der in den Polymerisationsbehälter vorgelegten, einbehaltenen Teilmenge der wässrigen Reaktionskomposition zu der Gesamtmenge des im zweiten Verfahrensdurchgang eingesetzten Wassers, des im zweiten Verfahrensdurchgang eingesetzten Säuremonomers und des im zweiten Verfahrensdurchgang eingesetzten Polyethermakromonomers 0,05 bis 30 Gew.-% beträgt.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Ester wie Ethylacrylat). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Die im ersten Verfahrensdurchgang einbehaltende Teilmenge der sich im Polymerisationsreaktor befindlichen wässrigen Reaktionskomposition wirkt im nachfolgenden Reaktionsansatz (im zweiten Verfahrensdurchgang, insbesondere zu Beginn des zweiten Verfahrensdurchgangs) als Puffer (ein stabiler pH-Wert ist vorteilhaft für die Polymerisation) und als Viskositätsregulator (die Viskosität sollte zu Beginn der Polymerisation nicht zu niedrig sein). Dies zeigt sich insbesondere in der großtechnischen Praxis, wenn Ansätze von mehreren Tonnen gefahren werden und insbesondere zu Beginn des zweiten Verfahrensdurchgangs. Falls ein Kettenregler eingesetzt wird, kann in vielen Fällen in dem erfindungsgemäßen Verfahren mit verhältnismäßig wenig Regler ein verhältnismäßig hoher Effekt erzielt werden, wobei vielfach sogar auf den Einsatz von Kettenregler verzichtet werden kann (Einsparung von Regler). Zusammenfassend kann gesagt werden, dass das erfindungsgemäße Verfahren besonders wirtschaftlich ist, wobei die als Verfahrensprodukt erzeugten Copolymere als Dispergiermittel für hydraulische Bindemittel, speziell als Fließmittel/Wasserreduktionsmittel, eine gute Performance zeigen.

Häufig wird die im ersten Verfahrensdurchgang einbehaltene Teilmenge der wässrigen Reaktionskomposition dem Polymerisationsreaktor entnommen und im zweiten Verfahrensdurchgang durch Einleiten in den Polymerisationsbehälter in dem Polymerisationsbehälter vorgelegt.

In einer bevorzugten Ausführungsform der Erfindung wird im zweiten Verfahrensdurchgang als Polymerisationsbehälter der im ersten Verfahrensdurchgang verwendete Polymerisationsreaktor eingesetzt, wobei die im ersten Verfahrensdurchgang einbehaltene Teilmenge der wässrigen Reaktionskomposition im Polymerisationsreaktor verbleibt und auf diese Weise im zweiten Verfahrensdurchgang in dem Polymerisationsbehälter vorgelegt wird. Dies kann in der Weise verwirklicht werden, dass nur eine Teilmenge der sich im Polymerisationsreaktor befindlichen wässrigen Reaktionskomposition nach Beendigung des ersten Verfahrensdurchgangs (also nachdem die Umsetzung der Monomere zumindest weitgehend erfolgt ist) aus dem Polymerisationsreaktor entfernt wird und der zweite Verfahrensdurchgang anschließend in dem Polymerisationsreaktor durchgeführt wird.

Häufig schließt sich dem zweiten Verfahrensdurchgang noch mindestens ein weiterer Verfahrensdurchgang an, in welchem eine einbehaltene Teilmenge einer wässrigen Reaktionskomposition aus einem jeweils vorherigen Verfahrensdurchgang eingesetzt wird.

In der Regel wird im ersten Verfahrensdurchgang nach Beendigung der Dosierung des Säuremonomers und nach Umsetzung von mindestens 85 Mol-% des vorgelegten Polyethermakromonomers der Polymerisationsreaktor geleert.

Meist beträgt das Verhältnis der in dem Polymerisationsbehälter vorgelegten, einbehaltenen Teilmenge der wässrigen Reaktionskomposition zu der Gesamtmenge des im zweiten Verfahrensdurchgang eingesetzten Wassers, des im zweiten Verfahrensdurchgang eingesetzten Säuremonomers und des im zweiten Verfahrensdurchgang eingesetzten Polyethermakromonomers 0,1 bis 15 Gew.-%, bevorzugt 0,2 bis 10 Gew.-%.

Normalerweise wird durch die Umsetzung des Säuremonomers eine Struktureinheit erzeugt, die gemäß einer der allgemeinen Formeln (Ia), (Ib), (Ic) und/oder (Id) ist 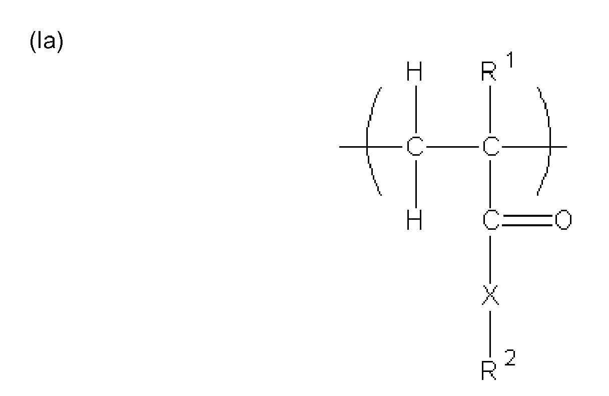 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 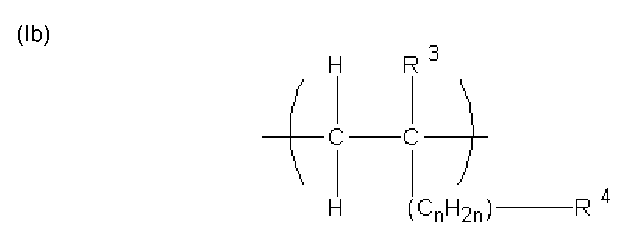 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 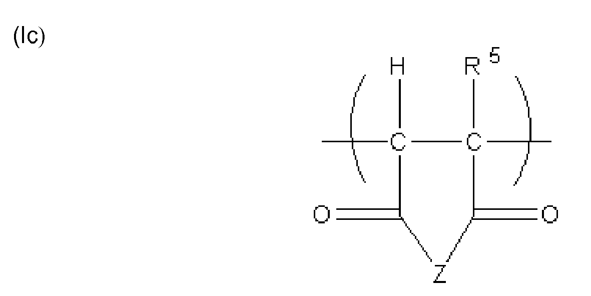 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 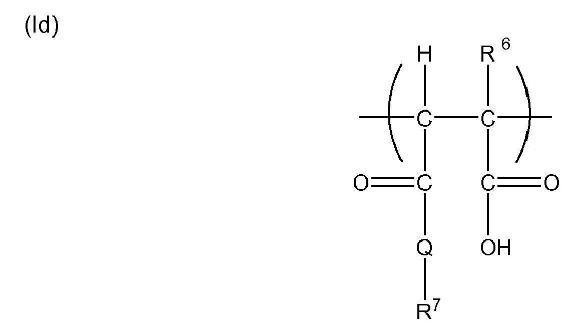 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Typischerweise wird als Säuremonomer Methacrylsäure, Acrylsäure, Maleinsäure, Maleinsäureanhydrid, ein Halbester der Maleinsäure oder eine Mischung aus mehreren dieser Komponenten eingesetzt.

Meist wird durch die Umsetzung des Polyethermakromonomers eine Struktureinheit erzeugt, die gemäß einer der allgemeinen Formeln (IIa), (IIb) und/oder (IIc) ist 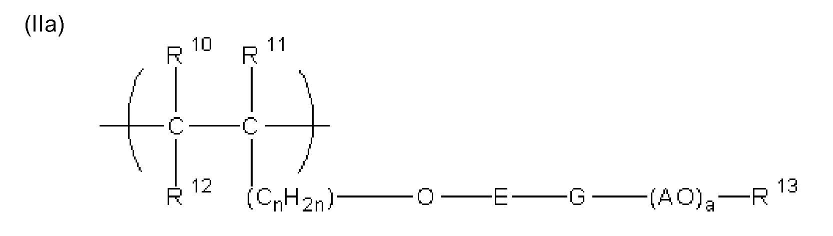 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;

E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄ und/oder durch eine nicht vorhandene Einheit;

G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 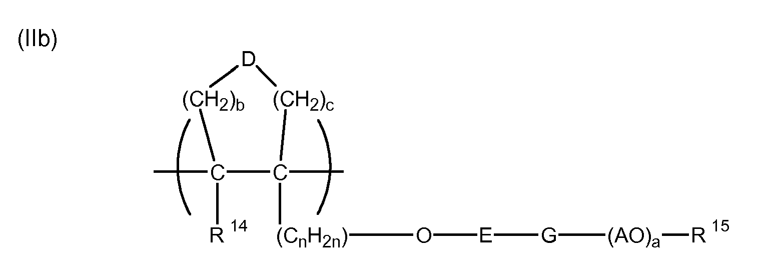 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist:
b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 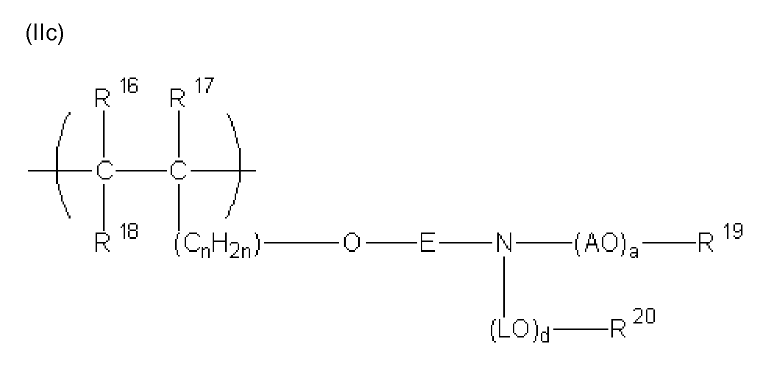 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;

E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Häufig wird als Polyethermakromonomer ein Vinylether mit bevorzugt einer arithmetisch mittleren Zahl an Oxyalkylengruppen von 4 bis 340 eingesetzt.

Als Polyethermakromonomer kommen insbesondere alkoxylierter Hydroxybutylvinylether und/oder alkoxyliertes Isoprenol und/oder alkoxylierter Diethylenglykolmonovinylether und/oder alkoxylierter (Meth)allylalkohol und/oder vinyliertes Methylpolyalkylenglykol mit bevorzugt jeweils einer arithmetisch mittleren Zahl an Oxyalkylengruppen von 5 bis 300 in Frage.

Die Alkoxyeinheiten der Polyethermakromonomere liegen in der Regel als Ethoxygruppen oder als Gemisch aus Ethoxy- und Propoxygruppen vor (diese Polyethermakromonomere sind erhältlich aus der Ethoxylierung bzw. Propoxylierung der entsprechenden Monomeralkohole.

Meist wird ein Peroxid enthaltendes Redoxinitiatorsystem als radikalischer Polymerisationsinitiator eingesetzt.

Typischerweise werden insgesamt mindestens 45 Mol-%, bevorzugt mindestens 80 Mol-% aller Struktureinheiten der Copolymere durch Einpolymerisieren von Säuremonomer und Polyethermakromonomer erzeugt.

Die Erfindung betrifft außerdem Copolymere, welche gemäß dem vorstehend beschriebenen Verfahren herstellbar sind.

Weiterhin betrifft die Erfindung die Verwendung dieser Copolymere als Dispergiermittel für hydraulische Bindemittel oder für latenthydraulische Bindemittel. Die erfindungsgemäßen Copolymere können beispielsweise auch (insbesondere in entwässerter Form) als Additiv für die Zementproduktion (Mahlhilfe und " Wasserreduzierer" für reine Portlandzemente bzw. Kompositzemente) eingesetzt werden.

Nachstehend soll die Erfindung anhand von Ausführungsbeispielen näher erläutert werden.

### Synthesebeispiel 1

Ein Glasreaktor ausgestattet mit mehreren Zulaufmöglichkeiten, Rührer und pH-Elektrode wurde mit 425 g Wasser und 350 g Vinyloxybutylpolyethylenglycol-3000 (hergestellt durch Ethoxylierung von Hydroxybutylvinylether mit 66 mol EO) beschickt (Lösung A) und auf 13 °C temperiert. 35 % einer zweiten vorbereiteten, teilneutralisierten Lösung (Lösung B), bestehend aus 75 g Wasser und 42,4 g Acrylsäure (99 %) wurden über einen Zeitraum von 15 min in den Glasreaktor zu Lösung A gegeben. Weiterhin wurden 1,7 g 3-Mercaptopropionsäure in den Reaktor gegeben. Eine 3. Lösung (Lösung C), bestehend aus 5 g einer Mischung aus Natriumsulfit, dem Dinatriumsalz der 2-Hydroxy-2-sulfinatoessigsäure und dem Dinatriumsalz der 2-Hydroxy-2-sulfonatoessigsäure, (Brüggolit FF6, Brüggemann GmbH) und 46 g Wasser wurde vorbereitet. Darauf wurden bei einer Temperatur von 13 °C 50 mg Eisen-(II)-sulfat-Heptahydrat, gelöst in einigen Tropfen Wasser, sowie 2,5 g 50 %ige Wasserstoffperoxidlösung zu Lösung A gegeben. Zeitgleich wurden über 45 Minuten die noch verbliebene Lösung B und über 60 Minuten Lösung C in die Lösung A dosiert. Zum Abschluss wurde mit 20 %iger Natriumhydroxid-Lösung neutralisiert.

Es wurde die wässrige Lösung eines Copolymers mit einem mittleren Molgewicht von Mw = 29000 g/mol (bestimmt durch GPC) und einem Feststoffgehalt von 40 % erhalten.

Für die im Anschluss durchgeführten Reaktionsansätze verblieben 42,5 g bzw. 85 g (entspricht ca. 4 bzw. 8 Gew.-% der gesamten Reaktionslösung) im Reaktionsreaktor.

Die Ansätze werden dann wie oben beschrieben wiederholt.

### Synthesebeispiel 2 (4 Gew.-% Rest im Reaktor)

Ein Glasreaktor, beinhaltend 42,5 g Fließmittellösung entsprechend Synthesebeispiel 1 und ausgestattet mit mehreren Zulaufmöglichkeiten, Rührer und pH-Elektrode wurde mit 425 g Wasser und 350 g Vinyloxybutylpolyethylenglycol-3000 (hergestellt durch Ethoxylierung von Hydroxybutylvinylether mit 66 mol EO) beschickt (Lösung A) und auf 13 °C temperiert. 35 % einer zweiten vorbereiteten, teilneutralisierten Lösung (Lösung B), bestehend aus 75 g Wasser und 42,4 g Acrylsäure (99 %) wurden über einen Zeitraum von 15 min in den Glasreaktor zu Lösung A gegeben. Weiterhin wurden 1,7 g 3-Mercaptopropionsäure in den Reaktor gegeben. Eine 3. Lösung (Lösung C), bestehend aus 5 g einer Mischung aus Natriumsulfit, dem Dinatriumsalz der 2-Hydroxy-2-sulfinatoessigsäure und dem Dinatriumsalz der 2-Hydroxy-2-sulfonatoessigsäure, (Brüggolit FF6 Fa. Brüggemann GmbH) und 46 g Wasser wurde vorbereitet. Darauf wurden bei einer Temperatur von 13 °C 50 mg Eisen-(II)-sulfat-Heptahydrat, gelöst in einigen Tropfen Wasser, sowie 2,5 g 50 %ige Wasserstoffperoxidlösung zu Lösung A gegeben. Zeitgleich wurden über 45 Minuten die noch verbliebene Lösung B und über 60 Minuten Lösung C in die Lösung A dosiert. Zum Abschluss wurde mit 20 %iger Natriumhydroxid-Lösung neutralisiert.

Es wurde die wässrige Lösung eines Copolymers mit einem mittleren Molgewicht von Mw = 29000 g/mol (bestimmt durch GPC) und einem Feststoffgehalt von 40 % erhalten.

### Synthesebeispiel 3 (8 Gew.-% Rest im Reaktor)

Ein Glasreaktor, beinhaltend 85 g Fließmittellösung entsprechend Synthesebeispiel 1 und ausgestattet mit mehreren Zulaufmöglichkeiten, Rührer und pH-Elektrode wurde mit 425 g Wasser und 350 g Vinyloxybutylpolyethylenglycol-3000 (hergestellt durch Ethoxylierung von Hydroxybutylvinylether mit 66 mol EO) beschickt (Lösung A) und auf 13 °C temperiert. 35 % einer zweiten vorbereiteten, teilneutralisierten Lösung (Lösung B), bestehend aus 75 g Wasser und 42,4 g Acrylsäure (99 %) wurden über einen Zeitraum von 15 min in den Glasreaktor zu Lösung A gegeben. Weiterhin wurden 1,7 g 3-Mercaptopropionsäure in den Reaktor gegeben. Eine 3. Lösung (Lösung C), bestehend aus 5 g einer Mischung aus Natriumsulfit, dem Dinatriumsalz der 2-Hydroxy-2-sulfinatoessigsäure und dem Dinatriumsalz der 2-Hydroxy-2-sulfonatoessigsäure, (Brüggolit FF6 Fa. Brüggemann GmbH) und 46 g Wasser wurde vorbereitet. Darauf wurden bei einer Temperatur von 13 °C 50 mg Eisen-(II)-sulfat-Heptahydrat, gelöst in einigen Tropfen Wasser, sowie 2,5 g 50 %ige Wasserstoffperoxidlösung zu Lösung A gegeben. Zeitgleich wurden über 45 Minuten die noch verbliebene Lösung B und über 60 Minuten Lösung C in die Lösung A dosiert. Zum Abschluss wurde mit 20 %iger Natriumhydroxid-Lösung neutralisiert.

Es wurde die wässrige Lösung eines Copolymers mit einem mittleren Molgewicht von Mw = 29000 g/mol und einem Feststoffgehalt von 40 % erhalten.

### Fazit der Ergebnisse der Synthesebeispiele:

Für die Synthesebeispiele 2 und 3, welche eine einbehaltende Teilmenge von 4 bzw. 8 Gew.-% der wässrigen Reaktionskomposition des ersten Verfahrensdurchganges (hier Synthesebeispiel 1) aufwiesen, konnte eine schwache Pufferwirkung durch die einbehaltende Teilmenge festgestellt werden, welche sich durch einen etwas stabileren pH-Wert während der Polymerisation zeigte. Eine Regulierung der Viskosität konnte bei den im Labormaßstab durchgeführten Synthesebeispielen nur im Ansatz aber nicht nennenswert beobachtet werden. Beide Effekte, sowohl die Pufferwirkung als auch die Regulierung der Viskosität, zeigen sich insbesondere im großtechnischen Maßstab. Hier kommt es zu einer deutlichen Pufferwirkung durch die einbehaltende Teilmenge und es kann eine deutliche Reglereinsparung beobachtet werden.

### Vergleichsbeispiel (Vgl.) - entsprechend zu den Herstellungsbeispielen

Käufliches Betonfließmittel Glenium® 115 (von BASF Construction Polymers GmbH) auf Basis eines Copolymerisats aus Vinyloxybutylenpoly(ethylenglykol), einer ethylenisch ungesättigten Carbonsäure und eines ethylenisch ungesättigten Dicarbonsäurederivats - das Polymer gemäß dem Vergleichsbeispiel weist gegenüber den Copolymertypen aus den Synthesebeispielen eine verwandte Polymerarchitektur auf.

Zur Bewertung der Copolymerlösungen wurden Mörteltests durchgeführt. Die experimentellen Durchführungen sind im Anwendungsbeispiel beschrieben. Bei den Tests sollte geprüft werden, ob die erfindungsgemäßen Copolymerlösungen unter den gleichen Testbedingungen (w/z-Wert, Temperatur, Zuschläge, etc.) bei gleicher oder geringerer Dosierung eine vergleichbar gute Performance, d.h. die gleiche Verflüssigung zeigen.

### Anwendungsbeispiel / Durchführung der Mörteltests:

876,65 g Portlandzement (CEM I 42,5 R, Karlstadt) wurden mit 1350 g Normensand, 567,87 g Quarzsand und 350,66 g Wasser, welches die erfindungsgemäßen Produkte bzw. das Vergleichsprodukt in gelöster Form enthielt, angerührt. Unmittelbar nach der Herstellung der Mörtelmischung erfolgten die Bestimmung des Ausbreitmaßes sowie dessen zeitliche Veränderung über einen Zeitraum von 30 Minuten.

Die Ergebnisse der Prüfung sind nachstehend tabellarisch aufgeführt.

| Zusatzmittel | Feststoff [Gew.-%] | Dosierung [Gew.-%] | Fließmaß in cm nach | | |
|---|---|---|---|---|---|
| | | | 0 min. | 15 min. | 30 min. |
| Bsp.1 (0 % Rest) | 33,2 | 0,12 | 24,9 | 22,5 | 21,8 |
| Bsp.2 (4 % Rest) | 33,2 | 0,11 | 24,4 | 22 | 20,8 |
| Bsp.3 (8 % Rest) | 33,2 | 0,115 | 25 | 22,7 | 21,6 |
| Vgl. | 33,2 | 0,13 | 24,4 | 23,5 | 22,9 |
| w/z = 0,42; Zement: Karlstadt CEM I 425,5 R | | | | | |

### Gesamtfazit der Ergebnisse der Vergleichsversuche:

Die vorstehenden Versuche zeigen, dass die Qualität der Fließmittel auf Basis der die Erfindung betreffenden Copolymere aus den Synthesebeispielen 2 und 3 (4 und 8 Gew.-% Rest) vergleichbar mit der Qualität des Copolymers aus Synthesebeispiel 1 (kein Rest) und hervorragend im Vergleich mit dem sich bereits in der Praxis bewährten Hochleistungspolymer (Vgl.) ist. Gegenüber dem kommerziell erhältlichen Produkt zeigen die erfindungsgemäßen Copolymere wirtschaftliche Vorteile, die nicht nur das Verfahren sondern auch die Dosierung betreffen.

## Patentansprüche

1. Verfahren zur Herstellung von Copolymeren mit mindestens zwei Verfahrensdurchgängen i) und ii), wobei
i) in einem ersten Verfahrensdurchgang Copolymer in semikontinuierlicher Betriebsweise in einer Polymerisationsvorrichtung, welche einen mit einer Dosiereinrichtung verbundenen Polymerisationsreaktor enthält, hergestellt wird, wobei Säuremonomer in der Dosiereinrichtung sowie Polyethermakromonomer, Säuremonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor eine wässrige Reaktionskomposition entsteht, in welcher Säuremonomer und Polyethermakromonomer unter Bildung des Copolymers durch radikalische Polymerisation umgesetzt werden, das molare Verhältnis von insgesamt eingesetztem Säuremonomer zu insgesamt eingesetztem Polyethermakromonomer 20 : 1 bis 1 : 1 beträgt, das molare Verhältnis von in den Polymerisationsreaktor vorgelegten Säuremonomer zu dem in den Polymerisationsreaktor eindosierten Säuremonomer 10 : 1 bis 1 : 10 beträgt, nach Beendigung der Dosierung des Säuremonomers und nach Umsetzung von mindestens 70 Mol-% des vorgelegten Polyethermakromonomers der Polymerisationsreaktor geleert wird, wobei eine Teilmenge der sich im Polymerisationsreaktor befindlichen wässrigen Reaktionskomposition einbehalten wird,
ii) in einem zweiten Verfahrensdurchgang Copolymer in semikontinuierlicher Betriebsweise hergestellt wird, wobei Polyethermakromonomer, Säuremonomer, Wasser sowie die einbehaltene Teilmenge der wässrigen Reaktionskomposition jeweils in einem Polymerisationsbehälter vorgelegt werden, radikalischer Polymerisationsinitiator in den Polymerisationsbehälter eingeleitet wird, während und/oder nach der Einleitung des radikalischen Polymerisationsinitiators Säuremonomer in den Polymerisationsbehälter eindosiert wird, wobei das Verhältnis der in den Polymerisationsbehälter vorgelegten, einbehaltenen Teilmenge der wässrigen Reaktionskomposition zu der Gesamtmenge des im zweiten Verfahrensdurchgang eingesetzten Wassers, des im zweiten Verfahrensdurchgang eingesetzten Säuremonomers und des im zweiten Verfahrensdurchgang eingesetzten Polyethermakromonomers 0,05 bis 30 Gew.-% beträgt.

2. Verfahren nach Anspruch 1, **dadurch gekennzeichnet, dass** die im ersten Verfahrensdurchgang einbehaltene Teilmenge der wässrigen Reaktionskomposition dem Polymerisationsreaktor entnommen wird und im zweiten Verfahrensdurchgang durch Einleiten in den Polymerisationsbehälter in dem Polymerisationsbehälter vorgelegt wird.

3. Verfahren nach Anspruch 1, **dadurch gekennzeichnet, dass** im zweiten Verfahrensdurchgang als Polymerisationsbehälter der im ersten Verfahrensdurchgang verwendete Polymerisationsreaktor eingesetzt wird, wobei die im ersten Verfahrensdurchgang einbehaltene Teilmenge der wässrigen Reaktionskomposition im Polymerisationsreaktor verbleibt und auf diese Weise im zweiten Verfahrensdurchgang in dem Polymerisationsbehälter vorgelegt wird.

4. Verfahren nach einem der Ansprüche 1 bis 3, **dadurch gekennzeichnet, dass** sich dem zweiten Verfahrensdurchgang noch mindestens ein weiterer Verfahrensdurchgang anschließt, in welchem eine einbehaltene Teilmenge einer wässrigen Reaktionskomposition aus einem jeweils vorherigen Verfahrensdurchgang eingesetzt wird.

5. Verfahren nach einem der Ansprüche 1 bis 4, **dadurch gekennzeichnet, dass** im ersten Verfahrensdurchgang nach Beendigung der Dosierung des Säuremonomers und nach Umsetzung von mindestens 85 Mol-% des vorgelegten Polyethermakromonomers der Polymerisationsreaktor geleert wird.

6. Verfahren nach einem der Ansprüche 1 bis 5, **dadurch gekennzeichnet, dass** das Verhältnis der in dem Polymerisationsbehälter vorgelegten, einbehaltenen Teilmenge der wässrigen Reaktionskomposition zu der Gesamtmenge des im zweiten Verfahrensdurchgang eingesetzten Wassers, des im zweiten Verfahrensdurchgang eingesetzten Säuremonomers und des im zweiten Verfahrensdurchgang eingesetzten Polyethermakromonomers 0,1 bis 15 Gew.-%, bevorzugt 0,2 bis 10 Gew.-%, beträgt.

7. Verfahren nach einem der Ansprüche 1 bis 6, **dadurch gekennzeichnet, dass** durch die Umsetzung des Säuremonomers eine Struktureinheit erzeugt wird, die gemäß einer der allgemeinen Formeln (Ia), (Ib), (Ic) und/oder (Id) ist 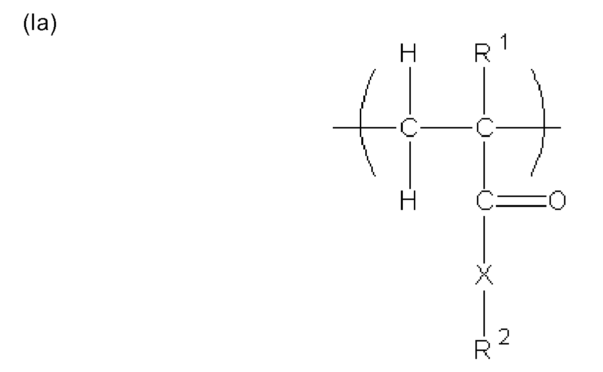 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 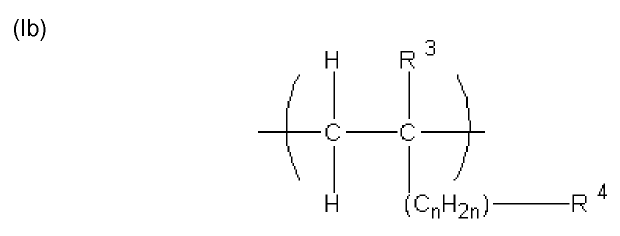 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 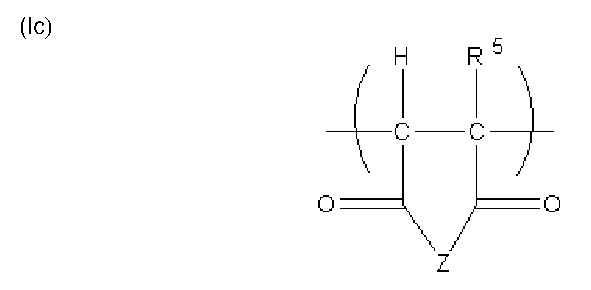 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 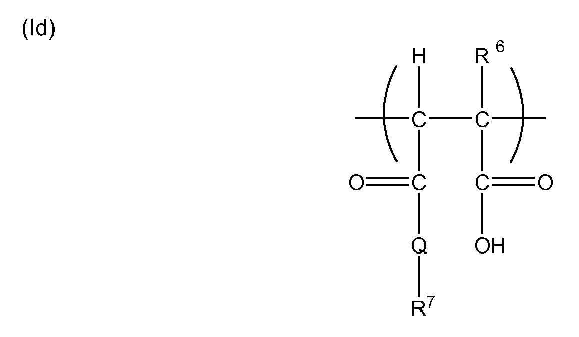 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

8. Verfahren nach einem der Ansprüche 1 bis 7, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

9. Verfahren nach einem der Ansprüche 1 bis 8, **dadurch gekennzeichnet, dass** durch die Umsetzung des Polyethermakromonomers eine Struktureinheit erzeugt wird, die gemäß einer der allgemeinen Formeln (IIa), (IIb) und/oder (IIc) ist 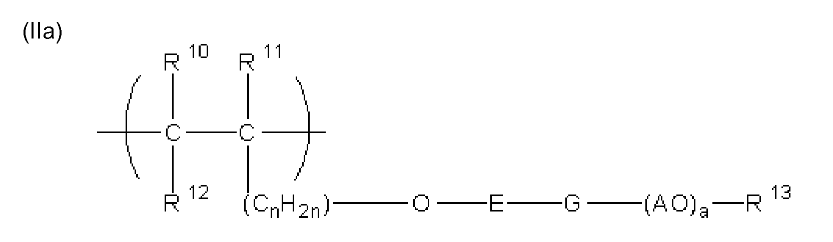 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 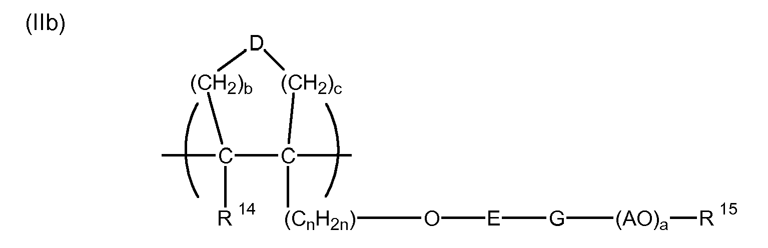 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nicht vorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist:
b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 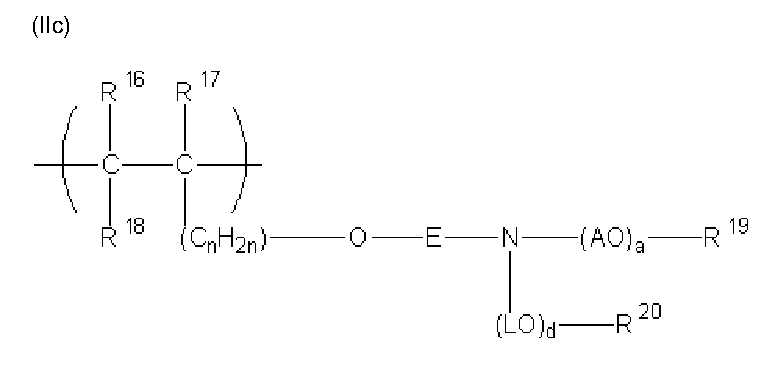 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

10. Verfahren nach einem der Ansprüche 1 bis 9, **dadurch gekennzeichnet, dass** als Polyethermakromonomer ein Vinylether mit bevorzugt einer arithmetisch mittleren Zahl an Oxyalkylengruppen von 4 bis 340 eingesetzt wird.

11. Verfahren nach einem der Ansprüche 1 bis 10, **dadurch gekennzeichnet, dass** als Polyethermakromonomer alkoxylierter Hydroxybutylvinylether und/oder alkoxylierter Diethylenglykolmonovinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 5 bis 300 eingesetzt wird.

12. Verfahren nach einem der Ansprüche 1 bis 11, **dadurch gekennzeichnet, dass** ein Peroxid enthaltendes Redoxinitiatorsystem als radikalischer Polymerisationsinitiator eingesetzt wird.

13. Verfahren nach einem der Ansprüche 1 bis 12, **dadurch gekennzeichnet, dass** insgesamt mindestens 45 Mol-%, bevorzugt mindestens 80 Mol-% aller Struktureinheiten der Copolymere durch Einpolymerisieren von Säuremonomer und Polyethermakromonomer erzeugt werden.

14. Copolymere herstellbar gemäß dem Verfahren nach einem der Ansprüche 1 bis 13.

15. Verwendung von Copolymeren gemäß Anspruch 14 als Dispergiermittel für hydraulische Bindemittel und/oder für latenthydraulische Bindemittel.
